# EUROPÄISCHE PATENTANMELDUNG

(11) **EP 1 336 925 A1**
(43) Veröffentlichungstag der Anmeldung: **20.08.2003**
(21) Anmeldenummer: 02003353.6
(22) Anmeldetag: 13.02.2002
(51) Int. Cl.: G06F 17/60, H04L 29/06

(54) **Verfahren zum Auffinden und Austauschen von Daten zwischen Teilnehmern eines Datennetzes mit mehreren Client-Teilnehmern und mindestens einem Server-Teilnehmer**

(71) Anmelder: Schreiber, Timo, 94032 Passau (DE)
(72) Erfinder: Schreiber, Timo, 94032 Passau (DE)
(74) Vertreter: Glawe. Delfs. Moll

(57) **Zusammenfassung**

Verfahren zum Auffinden und Austauschen von Daten zwischen Teilnehmern eines Datennetzes mit mehreren Client-Teilnehmern und mindestens einem Server-Teilnehmer, wobei von einem ersten Client-Teilnehmer mindestens ein Parameter von anzubietenden Datensätzen eingelesen wird und aus dem oder den Parametern primäre Suchparameter erzeugt werden, die als Angebotsdaten an den Server-Teilnehmer übermittelt werden (2), von einem zweiten Client-Teilnehmer mindestens ein Parameter von gewünschten Datensätzen abgefragt wird, aus dem oder den Parametern sekundäre Suchparameter erzeugt werden, die als Anfragedaten an den Server-Teilnehmer übermittelt werden (4), Empfangen eines Ergebnisses eines Vergleichs von primären und sekundären Suchparametern (5) und, falls beim Vergleich Übereinstimmung festgestellt wird, Aufbauen einer Verbindung zwischen den Client-Teilnehmern (6) und Übermitteln des gewünschten Datensatzes (8), wobei die Parameter mittels einer Unschärferelation zu den primären und sekundären Suchparametern Verarbeitet werden (1, 3).

## Beschreibung

Verfahren zum Auffinden und Austauschen von Daten zwischen Teilnehmern eines Datennetzes mit mehreren Client-Teilnehmern und mindestens einem Server-Teilnehmer, wobei von einem ersten Client-Teilnehmer mindestens ein Parameter von anzubietenden Datensätzen eingelesen wird und aus dem oder den Parametern primäre Suchparameter erzeugt werden, die als Angebotsdaten an den Server-Teilnehmer übermittelt werden, von einem zweiten Client-Teilnehmer mindestens ein Parameter von gewünschten Datensätzen abgefragt wird, aus dem oder den Parametern sekundäre Suchparameter erzeugt werden, die als Anfragedaten an den Server-Teilnehmer übermittelt werden, Empfangen eines Ergebnisses eines Vergleichs von primären und sekundären Suchparametern und, falls beim Vergleich Übereinstimmung festgestellt wird, Aufbauen einer Verbindung zwischen den Client-Teilnehmern und Übermitteln des gewünschten Datensatzes.

Es ist bekannt, zum Austausch von Daten über Datennetze die Daten auf einem oder mehreren zentralen Servern zu speichern, um sie an das Datennetz angeschlossenen Clients zur Verfügung zu stellen. Neben dieser klassischen Organisationsform eines Datennetzes gewann mit dem Aufkommen von öffentlichen Datennetzen, wie insbesondere dem Internet, eine zweite Organisationsform an Bedeutung. Bei dieser sind die Daten nicht zentral auf einem oder mehreren Servern gespeichert, sondern befinden sich über das gesamte Netz verteilt bei den einzelnen Clients. Benötigt ein Client Daten, die bei ihm selbst nicht gespeichert sondern auf einem anderen Computer des Netzes gespeichert sind, so wird ermittelt, auf welchem der übrigen Computer des Netzwerks die Daten gespeichert sind, und die Daten dementsprechend übertragen. Um ermitteln zu können, auf welchem der Computer gewünschte Daten gespeichert sind, kann entweder ein zentraler Server vorgesehen sein oder es sind Mechanismen vorgesehen, mittels derer der suchende Client die übrigen an das Datennetz angeschlossenen Clients abfragen kann. In dem letzteren Fall spricht man von einem peer-topeer-Netzwerk.

Netzwerke mit verteilten Daten, die einen zentralen Server beinhalten, arbeiten wie folgt. Der Server erhält von den Clients Informationen über die von den Clients zur Verfügung gestellten Daten. Ferner werden Suchanfragen nach bestimmten Daten von den Clients an den Server übermittelt. Der Server vergleicht die Suchanfragen mit den zur Verfügung stehenden Daten. Wenn festgestellt wird, daß die gesuchten Daten auf einem der Clients zur Verfügung stehen, wird zwischen dem suchendem und dem anbietenden Client eine Verbindung aufgebaut und die gewünschten Daten übermittelt. Zwar ist ein solches Netzwerk recht leistungsfähig, jedoch stellt der Server unter dem Aspekt der Datensicherheit einen Schwachpunkt dar. Da die Liste der zur Verfügung stehenden Daten zentral auf dem Server gehalten ist, kann das System an dieser Stelle leicht ausgespäht werden. Zwar sind auf dem Server nicht die Inhalte der einzelnen Dateien gespeichert, wohl aber Namen oder andere Kennzeichnungen der Dateien. Durch Filterung oder andere Maßnamen, die gezielt an den Server angewendet werden, ließe sich damit feststellen, welche Clients welche Daten bereitstellen und auch welche Clients welches Material zu welchem Zeitpunkt angefordert haben. Aus dieser Ausspähmöglichkeit ergeben sich erhebliche Einbußen hinsichtlich des Datenschutzes; darüber hinaus kann der Datenaustausch leicht zensiert werden.

Bei der anderen Art von verteilten Datennetzen ist kein zentraler Server vorgesehen, sondern die teilnehmenden Clients kommunizieren ausschließlich untereinander (peer-to-peer). Ein Ausspähen der Daten durch Filterung oder eine Kontrolle des Datenverkehrs in Form von Zensur ist hierbei so gut wie unmöglich. Der Nachteil dieser Art liegt jedoch darin, daß die Suche nach einer gewünschten Datei ausgesprochen aufwendig ist. Da es keinen zentralen Server gibt, an den ein Client eine Suchanfrage senden kann, verschickt er sie an mehrere andere, ihm bekannte Clients. Diese Clients wiederum prüfen jeweils, ob die gesuchte Datei in ihrem eigenen Datenstand ist. Falls dies der Fall ist, wird die Datei an den anfragenden Client übermittelt. Wenn sich die Datei nicht in dem Datenbestand des Clients befindet, reicht dieser die Anfrage an weitere andere ihm bekannte Clients weiter. Dieser Vorgang wiederholt sich solange, bis schließlich ein Client gefunden worden ist, der die gewünschte Datei in seinem Bestand hat und sie dann an den suchenden Client übertragen kann. Da jeder Client, der die gesuchte Datei nicht in seinem Datenbestand hat, die Anfrage an weitere, ihm bekannte Clients weitergibt, wächst die Zahl der Anfragen lawinenartig an. Daraus resultiert eine hohe Belastung des Netzwerks und sämtlicher an dem Netzwerk angeschlossener Clients. Entsprechende Einbußen der Netzwerkleistung sowohl beim Suchen wie auch beim Übertragen der Dateien sind die Folge. Als weiterer Nachteil solcher Systeme kommt hinzu, daß sie nicht oder nur schwer in von einander unabhängig arbeitende Untersysteme aufgeteilt werden können, wie dies bei dem vorstehend genannten System mit einem Server möglich ist.

Der Erfindung liegt die Aufgabe zugrunde, ein Verfahren zum Auffinden und Austauschen von Daten der eingangs genannten Art zu schaffen, daß die Vorteile einer niedrigen Netzwerkbelastung mit den Vorteilen hinsichtlich Auspähungs- und Zensurmöglichkeit vereint.

Die erfindungsgemäße Lösung liegt in einem Verfahren mit den Merkmalen des Anspruchs 1. Sie erstreckt sich ferner auf ein Computersystem nach Anspruch 13 und ein Computerprogrammprodukt nach Anspruch 14. Vorteilhafte Weiterbildungen ergeben sich aus den Unteransprüchen.

Erfindungsgemäß ist bei einem Verfahren zum Auffinden und Austauschen von Daten zwischen Teilnehmern eines Datennetzes mit mehreren Client-Teilnehmern und mindestens einem Server-Teilnehmer, wobei von einem ersten Client-Teilnehmer mindestens ein Parameter von anzubietenden Datensätzen eingelesen wird und aus dem oder den Parametern primäre Suchparameter erzeugt werden, die als Angebotsdaten an den Server-Teilnehmer übermittelt werden, von einem zweiten Client-Teilnehmer mindestens ein Parameter von gewünschten Datensätzen abgefragt wird, aus dem oder den Parametern sekundäre Suchparameter erzeugt werden, die als Anfragedaten an den Server-Teilnehmer übermittelt werden, Empfangen eines Ergebnisses eines Vergleichs von primären und sekundären Suchparametern und, falls beim Vergleich Übereinstimmung festgestellt wird, Aufbauen einer Verbindung zwischen den Client-Teilnehmern und Übermitteln des gewünschten Datensatzes, vorgesehen, daß die Parameter mittels einer Unschärferelation zu den Suchparametern verarbeitet werden.

### Zunächst seien einige verwendete Begriffe erläutert:

Unter einer Unschärferelation wird eine Beziehung zwischen Eingangs- und Ausgangs-Parametern verstanden, bei der die Eingangsparameter so verändert werden, daß von den Ausgangsparametern nicht mehr eindeutig auf die Eingangsparameter zurückgeschlossen werden kann. In umgekehrter Richtung besteht zweckmäßigerweise Eindeutigkeit, jedoch ist das nicht unbedingt erforderlich.

Unter einem Parameter wird ein Merkmal eines Datensatzes oder auch ein Inhalt oder Inhaltsteile verstanden. Bei den Merkmalen kann es sich um solche wie dem Titel, den Namen des Autors, die Länge des Datensatzes oder spezielle Suchbegriffe handeln.

Unter Abfragen wird verstanden, daß die gewünschten Daten aus einer anderen Datenquelle gewonnen werden. Bei der anderen Datenquelle kann es sich um eine andere Datei oder auch eine Schnittstelle, beispielsweise zu einem Terminal für Benutzereingaben handeln.

Unter einem Server wird ein solcher Teilnehmer an dem Datennetz verstanden, an den die Angebotsdaten und die Suchanfragen übertragen werden und der einen Vergleich der Daten vornimmt. In der Regel handelt es um einen eigenen Teilnehmer am Datennetz, jedoch soll nicht ausgeschlossen werden, daß einer der Client-Teilnehmer zugleich der Server-Teilnehmer ist.

Der Kern der Erfindung liegt darin, daß sowohl die beim Server eintreffenden Suchanfragen wie auch die Listen der zur Verfügung gestellten Datensätze einer Unschärfeoperation unterworfen werden, mit Hilfe derer die ursprünglich scharfen Parameter unscharf gemacht werden. Die unscharfen Parameter ermöglichen keinen eindeutigen Rückschluß mehr auf den ursprünglichen Parameter. Auf diese Weise kann ein Ausspähen der Daten oder Zensur verhindert werden. Denn dem Server sind lediglich unscharfe Suchparameter bekannt, die keinen eindeutigen Rückschluß auf die ursprünglichen Parameter zulassen. Es ist damit nicht mehr möglich nachzuweisen, welchen Dateien und Datensätze von welchen Clients angeboten und ausgetauscht wurden.

Zweckmäßigerweise wird als Unschärferelation eine Prüfsummenbildung verwendet. Eine Prüfsummenbildung hat den Vorteil, daß sie bei numerischen Eingangsparametern besonders einfach durchzuführen ist. Als numerische Eingangsparameter kommen insbesondere auch Buchstaben in Betracht, denen über eine entsprechende Codetabelle Zahlenwerte zugewiesen werden, wie beispielsweise ASCII-Code. Somit können auch Textmerkmale wie der Dateiname oder Teile davon, der Name eines Autors oder eines Interpreten eines Musikstücks der Unschärfe-Relation unterworfen werden. Mit Vorteil kann ein Substitutionszeichen auch einen oder mehrere Buchstaben ersetzen. Dabei kann das Substitutionszeichen wiederum ein Buchstabe sein. So können beispielsweise die Buchstaben "A", "B", "C", "D" in einem Wort, beispielsweise einem Dateinamen, sämtlich durch den Buchstaben "A" substituiert werden. Ebenfalls mit Vorteil kann ein verlustbehafteter Kompressionsalgorithmus verwendet werden.

Mit Vorteil verifizieren die ersten und zweiten Client-Teilnehmer die Übereinstimmung des gewünschten mit dem angebotenen Datensatz. Dem liegt die Überlegung zugrunde, daß seitens des Servers die Übereinstimmung lediglich hinsichtlich der unscharfen primären und sekundären Suchparameter festgestellt wurde. Es kann also nicht ausgeschlossen werden, daß die Übereinstimmung gerade durch die Unschärfe erst herbei geführt worden ist, sich die ursprünglichen zugrunde liegenden Parameter aber unterschieden haben. Eine solche Fehl-Übereinstimmung kann bei der Verifikation von den Client-Teilnehmer ermittelt werden und damit ein Datenaustausch verhindert werden.

Dabei ist es zwar möglich, aber nicht zwingend, die Verifikation anhand der ursprünglichen Parameter vorzunehmen. Es kann zweckmäßig sein, die Verifikation durch einen Vergleich von weiteren primären und sekundären Suchparametern durchzuführen. Unter weiteren primären und sekundären Suchparametern wird hierbei verstanden, daß diese Suchparameter einer anderen Unschärferelation unterworfen worden sind. Da es nicht sehr wahrscheinlich ist, daß bei einem Verarbeiten mittels einer anderen Unschärferelation wiederum in Wahrheit nicht übereinstimmende Parameter als übereinstimmend erscheinen, verringert sich entsprechend die Gefahr, daß unterschiedliche Parameter in fälschlicher Weise als übereinstimmend angesehen werden. Es versteht sich, daß dieser Schritt mehrfach mit unterschiedlichen Unschärferelationen durchgeführt werden kann, wobei die Gefahr immer weiter sinkt, daß fälschlich eine Übereinstimmung erkannt wird. Auf diese Weise wird erreicht, daß die beiden Client-Teilnehmer die unveränderten Parameter bzw. den Datensatz erst dann auszutauschen brauchen, wenn nahezu mit Sicherheit feststeht, daß wirklich Übereinstimmung zwischen dem gesuchten und dem angebotenen Datensatz besteht.

Mit Vorteil wird die Verbindung zwischen den Client-Teilnehmern so aufgebaut, daß die beiden Client-Teilnehmer direkt ohne Beteiligung des Server-Teilnehmers miteinander verbunden sind. Dadurch, daß sich der dann anschließende Datenaustausch zwischen den beiden Client-Teilnehmern ohne Beteiligung des Server-Teilnehmers geschieht, wird erreicht, daß an dem Server-Teilnehmer ansetzende Maßnahmen zum Ausspähen oder Zensieren des Datenaustausches wirkungslos bleiben. Es kann aber auch vorgesehen sein, daß zwischen den beiden Client-Teilnehmer eine verschlüsselte Verbindung aufgebaut wird, die über den Server-Teilnehmer geführt ist. Auch auf diese Weise kann weitgehend verhindert werden, daß die ausgetauschten Daten ausgespäht oder zensiert werden können. Es versteht sich, daß auch bei einer direkten Verbindung zwischen den Clients die Daten verschlüsselt werden können. Zweckmäßiger Weise wird zur Verschlüsselung ein public-key-Verschlüsselungsverfahren verwendet, bei welchem der Server-Teilnehmer einem oder beiden der Client-Teilnehmer einen öffentlichen Schlüssel des anderen Client-Teilnehmers übermittelt. Das hätte den Vorteil, daß die beiden Client-Teilnehmer von dem jeweiligen Gegenüber lediglich den ohnehin öffentlich bekannten Schlüssel erfahren, nicht aber die Internetadresse oder ein anderes Adressierungsmerkmal des jeweiligen anderen Teilnehmers. Da die schließlich zwischen den Client-Teilnehmern aufgebaute Verbindung verschlüsselt wird, kann sie von dem Server-Teilnehmer nicht ausgespäht werden. Auf diese Weise wird ein Maximum an Anonymität und Schutz gewährleistet.

Um ein schnelleres Auffinden der gesuchten Datensätze zu erreichen, wird zweckmäßigerweise zum Vergleichen eine Hash-Funktion verwendet. Hash-Funktionen sind im Stand der Technik wohl bekannt und brauchen hier nicht weiter erläutert zu werden.

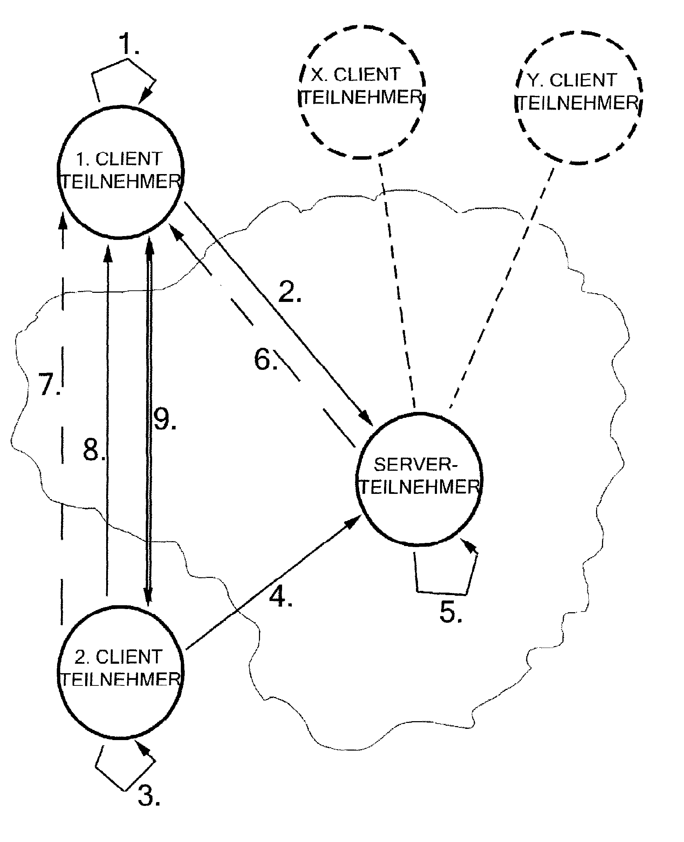

Die Erfindung wird nachfolgend unter Bezugnahme auf die beigefügte Zeichnung erläutert, in der ein typisches Ausführungsbeispiel der Erfindung exemplarisch dargestellt ist. Eine schematische Darstellung des erfindungsgemäßen Verfahrens und des Computersystems sind in der Zeichnung dargestellt. Dargestellt ist eine schematische Darstellung eines Computersystems mit einer schematischen Darstellung des Ablaufs eines Ausführungsbeispiels des erfindungsgemäßen Verfahrens.

In der einzigen Figur ist ein Datennetz mit mehreren Client-Teilnehmern und einem Server-Teilnehmer. Die Erfindung ist nicht auf die dargestellte Teilnehmerkonfiguration beschränkt, die Zahl der Teilnehmer ist an sich beliebig. Das dargestellte Ausführungsbeispiel für das erfindungsgemäße Verfahren läßt sich in folgende Schritte gliedern.

In einem ersten Schritt (1) werden bei einem ersten Client (dem Anbieter) Datensätze eingelesen, die angeboten werden sollen. Parameter von diesen Datensätzen werden mittels einer Unschärferelation verarbeitet, so daß die unscharfe primäre Suchparameter entstehen.

Mittels der Unschärferelation kann ein Parameter beispielsweise auf folgende Weise unscharf (mehrdeutig) gemacht werden:

Ein erstes Beispiel besteht im Zusammenfassen von verschiedenen möglicherweise in einem Parameter vorkommenden Zeichen zu mehrdeutigen Zeichen. Durch die Mehrdeutigkeit wird ein Rückschluß auf das ursprünglich vorhandene Zeichen unmöglich gemacht. Beispielsweise wird ein Dateiname durch die Unschärferelation derart verarbeitet, daß alle Buchstaben "A", "B", "C", "D" zu dem Buchstaben "A" (Substitutionszeichen) gewandelt werden. So würde mit dem Dateinamen "ADDA" als Parameter eines Datensatzes betreffend einen Song oder Musikvideo einer Musikgruppe "ADDA" dementsprechend zu dem unscharfen Suchparameter "AAAA" gewandelt werden. Aus dieser Zeichenfolge kann nicht eindeutig darauf rückgeschlossen werden, daß der ursprüngliche Parameter "ADDA" war; genauso gut hätte es sich beispielsweise um "DAAD" oder um "ABAB" handeln können.

Ein zweites Beispiel für eine Unschärferelation besteht darin, daß eine Prüfsumme über die Zeichen eines Parameters, beispielsweise des partiellen Dateinamens, gebildet wird oder ein verlustbehafteter Kompressionsalgorithmus oder eine ähnliche Funktion darauf angewendet wird. Solche Kompressionsalgorithmen sind im Stand der Technik bekannt; sie dienen u. a. zur Komprimierung von Musik (mp3) oder Bildern (jpeg bzw. mpeg) und brauchen hier nicht näher erläutert zu werden. Welcher Kompressionsalgorithmus verwendet wird, ist an sich beliebig, solange er verlustbehaftet ist. Denn im Vordergrund steht nicht die Verminderung der Dateigröße, sondern der Verlust an Eindeutigkeit aufgrund der Kompressionsverluste. Zugrunde liegt der Gedanke, daß mit Anwendung einer mathematischen Funktion als Unschärferelation, die zumindest in Rückrichtung nicht eindeutig ist, aus dem ursprünglichen Parameter ein unscharfer Suchparameter erhalten wird, der wie bereits vorstehend beschrieben auf Grund seiner Mehrdeutigkeit sich nicht mehr eindeutig in den ursprünglichen Parameter zurückwandeln läßt. Damit kann aus dem unscharfen Suchparameter nicht mehr auf die tatsächliche Suchabsicht des Nachfragers geschlossen werden.

Ein drittes Beispiel besteht darin, daß als Unschärferelation ein Auslassen von Zeichen verwendet wird, beispielsweise durch Streichung von Leerzeichen in einem Parameter, oder durch andere Arten von Umwandlungen von Zeichen. Auch hier ist das entscheidende Kriterium, daß nach der Verarbeitung mit der Unschärferelation der unscharfe Suchparameter keinen eindeutigen Rückschluß auf den ursprünglich eingegebenen Parameter mehr zulassen darf. Es ist nicht unbedingt erforderlich, sämtliche Parameter eines Datensatzes der Unschärferelation zu unterwerfen; häufig genügt es, dies lediglich bei besonders kritischen Parametern, wie beispielsweise dem Dateinamen oder partiellen Dateiinhalten vorzunehmen. Nicht erforderlich ist dies beispielsweise bei Suchparametern wie der Länge eines Songs, eines Videos oder eines Dokuments.

Ein viertes Beispiel besteht darin, daß partieller oder ganzer (letzteres ist allerdings praktisch eher von untergeordneter Bedeutung) Dateiinhalt verwendet wird. Ein partieller Dateiinhalt wäre beispielsweise der sogenannte ID3-Tag bei MP3-Dateien (MP3-Dateien sind Dateien, welche Informationen in dem von der MPEG-Group festgelegten Format MPEG1-layer3 beinhalten). Damit kann nach markanten Stellen eines Datensatzes gesucht werden, beispielsweise einem Refrain oder einem Intro eines Musikstücks.

In einem zweiten Schritt (2) wird der erste Client-Teilnehmer mit dem Datennetz verbunden. Von diesem Client-Teilnehmer wird einem Server-Teilnehmer eine Liste der primären Suchparameter von den Datensätzen übermittelt, die der Anbieter zur Verfügung stellt. Sofern es der Betreiber des Servers oder die entsprechend konfigurierte Serversoftware gestattet, kann ein Client-Teilnehmer eventuell auch dann am Datenaustausch teilnehmen, wenn er selbst keine Datensätze zur Verfügung stellt; alternativ kann Teilnehmern, die keine Datensätze zur Verfügung stellen der Zugang verweigert werden. Das Übertragen der Liste mit den zur Verfügung gestellten Datensätzen - in Form der unscharf gemachten primären Suchparameter - dient zu dem Zweck, daß ein anderer Client-Teilnehmer (Nachfrager), der nach diesen Daten sucht, fündig werden kann.

In einem dritten Schritt (3) fragt der zweite Client-Teilnehmer (Nachfrager) Parameter eines gewünschten Parameters ab. Nachdem die Parameter von gewünschten Datensätzen abgefragt sind, werden sie mit der Unschärferelation verarbeitet, so daß unscharfe sekundäre Suchparameter erhalten werden. Dabei kann pro Datensatz ein oder auch mehrere Parameter der Verarbeitung unterzogen werden; da der Nachfrager nicht wissen kann, welcher Parameter des gewünschten Datensatzes dem Server übermittelt worden ist und damit bei der Suche verwendet werden kann, erhöht sich seine Chance, wenn er möglichst viele verschiedene Parameter eines Datensatzes in unscharfer Form übermittelt. Unscharf gemachten sekundären Suchparameter werden in einem vierten Schritt (4) an den Server übertragen. Es kann sein, daß Client-Teilnehmern Zugang als Nachfrager erst dann gewährt wird, wenn er selber eine Liste mit primären Suchparametern wie im ersten Schritt beschrieben, übermittelt hat. Das dient als Schutz vor Schmarotzern.

In einem fünften Schritt (5) vergleicht der Server die übersandten primären Suchparameter der angebotenen Datensätze mit den ihm übermittelten sekundären Suchparametern für die gesuchten Datensätze. Wenn eine hinreichende Übereinstimmung gemäß voreingestellten Kriterien gefunden wird, so ermittelt der Server, von welchen Teilnehmern die übereinstimmenden primären und sekundären Suchparametern übermittelt worden sind.

In einem sechsten Schritt (6) sorgt der Server dann dafür, daß zwischen diesen beiden Teilnehmern eine Verbindung zum Transfer des gewünschten Datensatzes aufgebaut wird. In dem dargestellten Ausführungsbeispiel übermittelt der Server an den Anbieter die Netzwerkadresse, im Internet die IP-Adresse, des Nachfragers. Es versteht sich, daß alternativ auch an den Nachfrager die Adresse des Anbieters übermittelt werden kann. Soweit möglich, übermittelt der Server für den Fall, daß eine verschlüsselte Verbindung zwischen dem Nachfrager und dem Anbieter aufgebaut werden soll, zur Durchführung der Verschlüsselung benötigte Daten, insbesondere den öffentlichen Schlüssel eines RSA-Verfahrens.

In einem siebten Schritt (7) baut der Anbieter eine Verbindung mit dem Nachfrager auf. Zur Erhöhung der Sicherheit gegenüber Ausspähen oder Zensur wird die Verbindung derart aufgebaut, daß sie nicht über den Server , sondern zwischen den Anbieter und dem Nachfrager direkt läuft, oder aber daß sie verschlüsselt wird, ohne daß der Server (durch Kenntnis des notwendigen Schlüssels) Möglichkeit zur Entschlüsselung hat. Besonders bewährt hat es sich, beides durchzuführen, d.h. es wird eine verschlüsselte Direktverbindung zwischen dem Anbieter und dem Nachfrager aufgebaut. Die zur Anwendung kommenden Verschlüsselungsverfahren können je nach Anforderung an Sicherheit und Schnelligkeit ausgewählt werden. Es hat sich bewährt, als Verschlüsselungsverfahren ein Verfahren wie das RSA-Verfahren zu benutzen, das einen öffentlichen und eine privaten Schlüssel verwendet. Von den Clients (Anbieter, Nachfrager) wird dann bereits beim Übermitteln der primären bzw. sekundären Suchparameter auch der öffentliche Schlüssel an den Server zur Weitergabe an den Client übermittelt, der später Partner einer verschlüsselten Verbindung sein soll. Wenn der Server bei dem Vergleich der Suchparameter eine Übereinstimmung festgestellt hat, so übermittelt er den zuvor erhaltenen öffentlichen Schlüssel des einen Clients an den anderen; dies kann nur in eine Richtung oder in beide Richtungen durchgeführt werden, so daß beide Clients jeweils den öffentlichen Schlüssel des anderen erkennen. Dank der hohen Sicherheit des RSA-Verfahrens oder eines anderen entsprechenden Verschlüsselungsverfahrens kann dann die Verbindung sogar über den Server geführt werden, da der Server ohne Kenntnis des jeweiligen privaten Schlüssels nicht zur Entschlüsselung befähigt ist, also keinen Einblick in die übertragenen Datensätze bekommen kann. Der Vorteil bei einer Führung über den Server ist, daß der Server nicht einem der Client-Teilnehmer, dem Nachfrager oder dem Anbieter, die Netzwerkadresse (IP-Adresse) oder ein anderes zur Adressierung verwendbares Merkmal des anderen Client-Teilnehmer mitzuteilen braucht.

In einem achten Schritt (8) bauen der Anbieter und der Nachfrager zur Übermittlung des gewünschten Datensatzes eine Verbindung zwischen sich auf, die genügend sicher gestaltet ist, beispielsweise durch Anwendung des sogenannten RSA-Verfahrens.

In einem neunten Schritt (9) werden die gewünschten Datensätze von dem Anbieter an den Nachfrager übermittelt. Zur Sicherheit prüfen die beiden Clients vor der Übertragung des Datensatzes noch einmal nach, ob der angebotene und der gewünschte Datensatz tatsächlich übereinstimmen. Das steht vor dem Hintergrund, daß die Übereinstimmung bisher nur von dem Server aufgrund des Vergleichs der unscharfen primären und sekundären Suchparameter durchgeführt worden ist. Es kann hierbei nicht ausgeschlossen werden, daß Fehlübereinstimmungen seitens des Servers detektiert werden, bei denen in Wahrheit nicht übereinstimmende Parameter als übereinstimmend erscheinen. Da der Server über die unveränderten, originalen Parameter nicht verfügt, kann er diese Fehl-Übereinstimmung nicht erkennen und leitet daher den Verbindungsaufbau zwischen den betroffenen Clients ein. Die Clients hingegen verfügen über die originalen Parameter und können auf diese Weise verifizieren, ob die von dem Server festgestellte Übereinstimmung hinsichtlich der unscharfen Suchparameter auch hinsichtlich der originalen Parameter besteht. Dies kann dadurch erfolgen, daß die Clients die originalen Parameter austauschen und miteinander vergleichen oder, zur weiteren Erhöhung der Sicherheit und der Anonymität, kann dies durch Durchführen einer anderen Unschärferelation und Vergleich des dabei erhaltenen Ergebnisses durchgeführt werden. Zwar besteht im letzteren Fall immer noch ein gewisses Risiko, daß trotz zweier verschiedener Unschärferelation immer noch eine Fehl-Übereinstimmung vorliegt, jedoch kann die Verifikation mehrfach mit jeweils verschiedenen Unschärferelationen wiederholt werden, so daß die Wahrscheinlichkeit einer Fehl-Übereinstimmung schließlich auf einen beliebigen vernachläßigbaren Wert gedrückt werden.

Dies soll an dem folgenden Beispiel verdeutlicht werden. Es sei angenommen, die Unschärferelation ersetzt sowohl die Zeichen "A" als auch "D" durch das Substitutionszeichen "A". Nun sucht der Nachfrager nach einem Datensatz mit dem Titel "ADDA" und der Anbieter besitzt einen Datensatz mit dem Titel "DADA". Nach Verarbeitung durch die Unschärferelation entsteht in beiden Fällen als Suchparameter die Zeichenfolge "AAAA", die von den beiden an den Server übermittelt wird. Der Server wird also bei dem Vergleich der unscharfen Suchparameter eine Übereinstimmung feststellen und eine, wie sich bei nachfolgender Verifikation der beiden Clients untereinander herausstellen wird - unzutreffende Verbindung aufbauen. Zur Verifikation können die Clients nun zum einen die originalen, unveränderten Parameter austauschen und vergleichen. Dabei wird sich herausstellen, daß in Wahrheit keine Übereinstimmung besteht. Es besteht auch die Möglichkeit, daß eine andere Unschärferelation verwendet wird, beispielsweise in dem alle Vokale zu dem Buchstaben "E" gewandelt werden. Dann wird der Parameter "ADDA" zu "EDDE" und der Parameter "BABA" zu "BEBE" gewandelt. Die Clients werden bei dem Vergleich nun richtigerweise feststellen, daß keine Übereinstimmung besteht. Die Verbindung wird daraufhin abgebaut.

Die beschrieben Erfindung eignet sich insbesondere für solche Datensätze, die über den Namen eines Titel, einer Gruppe oder eines Interpreten eindeutig beschrieben werden können, wie beispielsweise MP3-Dateien oder Videos. Darüber hinaus ist es aber auch für jegliche Art von Daten oder Dateien oder andere Informationen nutzbar. Gerade darin liegt eine Stärke der Erfindung.

Es versteht sich, daß insbesondere bei einem größeren Datennetz nicht nur ein Server vorhanden zu sein braucht, sondern daß auch mehrere Server vorhanden sein können. Diese können unabhängig von einander arbeiten oder auch miteinander kommunizieren. Bei dem letzteren Fall wäre es zweckmäßig, wenn sie sich nicht sämtliche Suchanfragen und/oder Angebote untereinander mitteilen, sondern nur bei solchen, bei denen keine Übereinstimmung festgestellt werden konnte. Auf diese Weise wird überflüssiger Datenverkehr minimiert, gleichzeitig aber die Wahrscheinlichkeit zum Erzielen einer Übereinstimmung maximiert.

## Patentansprüche

1. Verfahren zum Auffinden und Austauschen von Daten zwischen Teilnehmern eines Datennetzes mit mehreren Client-Teilnehmern und mindestens einem Server-Teilnehmer,
wobei von einem ersten Client-Teilnehmer mindestens ein Parameter von anzubietenden Datensätzen eingelesen wird und aus dem oder den Parametern primäre Suchparameter erzeugt werden, die als Angebotsdaten an den Server-Teilnehmer übermittelt werden (2),
von einem zweiten Client-Teilnehmer mindestens ein Parameter von gewünschten Datensätzen abgefragt wird, aus dem oder den Parametern sekundäre Suchparameter erzeugt werden, die als Anfragedaten an den Server-Teilnehmer übermittelt werden (4),
Empfangen eines Ergebnisses eines Vergleichs von primären und sekundären Suchparametern (5) und, falls beim Vergleich Übereinstimmung festgestellt wird, Aufbauen einer Verbindung zwischen den Client-Teilnehmern (6) und Übermitteln des gewünschten Datensatzes (8), **gekennzeichnet durch**
Verarbeiten der Parameter mittels einer Unschärferelation zu den primären und sekundären Suchparametern (1, 3).

2. Verfahren nach Anspruch 1, **dadurch gekennzeichnet, daß** die Unschärferelation so ausgeführt wird, daß von den Suchparametern nicht eindeutig auf die Parameter rückgeschlossen werden kann.

3. Verfahren nach Anspruch 1 oder 2, **dadurch gekennzeichnet, daß** als Unschärferelation eine Prüfsummenbildung verwendet wird.

4. Verfahren nach Anspruch 1 oder 2, **dadurch gekennzeichnet, daß** als Unschärferelation ein Ersetzen von verschiedenen Zeichen durch ein Substitutionszeichen verwendet wird.

5. Verfahren nach Anspruch 1 oder 2, **dadurch gekennzeichnet, daß** als Unschärferelation ein verlustbehafteter Kompressionsalgorithmus verwendet wird.

6. Verfahren nach einem der vorgehenden Ansprüche, **dadurch gekennzeichnet, daß** die Client-Teilnehmer nach Herstellen der Verbindung die Übereinstimmung des gesuchten mit dem angebotenen Datensatz verifizieren.

7. Verfahren nach Anspruch 6, **dadurch gekennzeichnet, daß** das Verifizieren durch Vergleichen von weiteren primären und sekundären Suchparametern desselben Datensatzes durchgeführt wird.

8. Verfahren nach einem der vorhergehenden Ansprüche, **dadurch gekennzeichnet, daß** die ersten und zweiten Client-Teilnehmer einer Direktverbindung ohne Beteiligung des Server-Teilnehmers aufbauen.

9. Verfahren nach einem der vorgehenden Ansprüche, **dadurch gekennzeichnet, daß** die ersten und zweiten Client-Teilnehmer eine verschlüsselte Verbindung aufbauen.

10. Verfahren nach Anspruch 9, **dadurch gekennzeichnet, daß** die verschlüsselte Verbindung über den Server geführt wird.

11. Verfahren nach Anspruch 9 oder 10, **dadurch gekennzeichnet, daß** ein public-key-Verfahren verwendet wird, wobei der Server-Teilnehmer dem ersten und/oder dem zweiten Client-Teilnehmer einen öffentlichen Schlüssel des anderen der beiden Client-Teilnehmer übermittelt.

12. Verfahren nach einem der vorhergehenden Ansprüchen, **dadurch gekennzeichnet, daß** für den Vergleich eine Hash-Funktion verwendet wird.

13. Computer-System zur Durchführung des Verfahrens nach einem der Ansprüche 1 bis 12.

14. Computerprogramm-Produkt zur Durchführung des Verfahrens nach einem der Ansprüche 1 bis 12.
